# DEMANDE DE BREVET EUROPEEN

(11) **EP 0 935 064 A1**
(43) Date de publication de la demande: **11.08.1999**
(21) Numéro de dépôt: 99400245.9
(22) Date de dépôt: 04.02.1999
(51) Int. Cl.: F02K 1/70

(54) **Inverseur de poussée de turboreacteur à obstacles aval**

(30) Priorité: 04.02.1998 FR 9801276
(71) Demandeur: Hispano-Suiza Aérostructures, 76700 Gonfreville l'Orcher (FR)
(72) Inventeur: Gonidec, Patrick, 76290 Montivilliers (FR); Rouyer, Pascal Gérard, 76430 Saint Aubin Routot (FR); Vauchel, Guy Bernard, 76610 Le Havre (FR)

(57) **Abrégé**

Un inverseur de poussée de turboréacteur comporte des obstacles aval (2) intégrés à la paroi extérieure du canal d'éjection du turboréacteur en position de poussée directe et constituant en position déployée des obstacles de déviation du flux en procurant une inversion de poussée. Chaque obstacle aval (2) est équipé d'un panneau interne mobile (13), obstacle (2) et panneau (13) ayant des débattements angulaires différents lors du passage en position d'inversion et le moyen de déplacement (6, 7) étant commun à l'obstacle aval (2) et au panneau interne (13).

## Description

La présente invention concerne un inverseur de poussée à obstacles aval destiné à être monté sur des moteurs d'avion de type turboréacteur à double ou simple flux.

FR-A-2 622 928 illustre un exemple d'inverseur de poussée disposé en position aval et réalisant l'inversion de poussée du flux secondaire ou flux froid d'un turboréacteur à doble flux. Sur ce type d'inverseur, des obstacles aval ou coquilles, en plus d'assurer l'inversion soit du flux secondaire soit de l'ensemble des flux, forment également la tuyère d'éjection lors du fonctionnement en poussée directe. Le bord aval desdits obstacles constitue par conséquent dans ce cas l'extrémité aval de la paroi externe du canal, notamment du canal annulaire de circulation de la veine de flux secondaire dans l'application à un turboréacteur à double flux, dans les réalisations connues de ce type, les obstacles sont montés pivotants sur la structure fixe de l'inverseur.

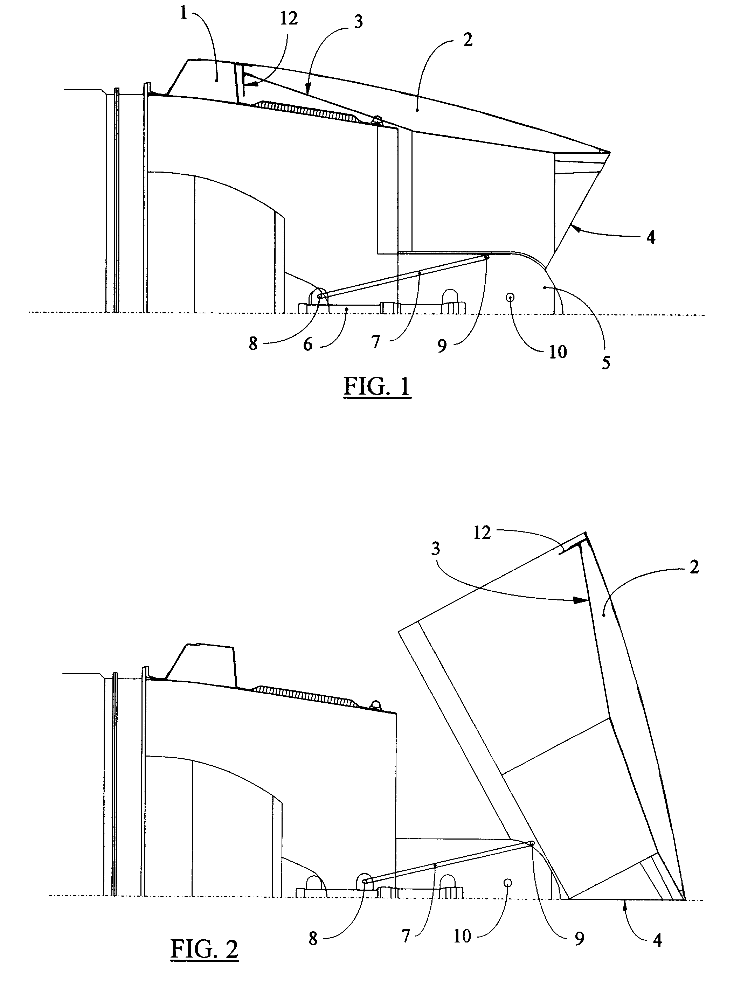

Les figures 1 et 2 des dessins annexés montrent un exemple de réalisation de ce type connu d'inverseur de poussée, respectivement en position de fonctionnement en poussée directe et en inversion de poussée. L'inverseur est constitué dans ce cas d'une structure fixe amont 1 fixée sur le turboréacteur ou sa nacelle et comportant une paroi interne délimitant extérieurement le canal annulaire de circulation de la veine fluide, un carénage externe fixé sur la paroi interne et deux structures latérales 5. Deux obstacles aval 2 sont montés pivotants sur la structure fixe, notamment au moyen de pivots 10 portés par les structures latérales 5 qui supportent également un système de commande 6 des déplacements et de verrouillage des obstacles 2. Dans cet exemple, une bielle 7 relie à son extrémité 8 la partie mobile du vérin 6 à l'obstacle 2 en un point 9. L'extrémité aval 4 des obstacles 2 constitue le bord de fuite de la paroi externe, en prolongeant le carénage vers l'aval et n'est pas coplanaire. A son extrémité amont, l'obstacle 2 porte un becquet 12 de guidage du flux inversé.
Dans les solutions connues selon FR-A-2.348.371, US-A-5.176.340 ou GB-A-2.252.279 où les pivots des obstacles aval sont fixes, les obstacles ont l'inconvénient majeur d'avoir un profil interne fixe par rapport à son profil externe. De ce fait l'orientation en position déployée du profil interne dépend du déplacement global de l'obstacle, ce déplacement étant limité jusqu'au contact du bord aval desdits obstacles afin d'augmenter l'efficacité de l'inverseur. Ceci implique une découpe aval oblique de la sortie de tuyère entraînant des pertes aérodynamiques en jet direct, ces pertes étant supprimées selon US-A-5.176.340 et GB-A-2.252.279, par un système mécanique spécifique indépendant associé aux obstacles.
Selon GB-A-2.168.298 l'obstacle est constitué d'un panneau externe et d'un panneau interne, mais présente l'inconvénient majeur d'avoir des systèmes de commande indépendants pour chaque panneau, d'où une augmentation de la masse et l'introduction de problèmes de synchronisation entre les deux panneaux. De plus, la technologie retenue du pivotement central, oblige à avoir un détourage aval de panneau interne comportant une large entaille centrale et un détourage aval de panneau externe oblique en recouvrement, avec discontinuité des lignes, sur le panneau interne. Ces éléments associés provoquent de grandes perturbations aérodynamiques en jet direct.
Un inverseur de poussée de turboréacteur du type précité permettant de répondre à ces conditions sans encourir les inconvénients des solutions précédemment connues est caractérisé en ce que chaque obstacle aval est équipé d'un panneau interne mobile, lesdits obstacle et panneau interne ayant des débattements angulaires différents lors du passage à la position correspondant au fonctionnement en inversion de poussée et le moyen de déplacement étant commun à l'obstacle aval et au panneau interne associé et que ledit moyen de déplacement est monté fixe sur la structure fixe de l'inverseur.

D'autres caractéristiques et avantages de l'invention seront mieux compris à la lecture de la description qui va suivre des modes de réalisation de l'invention, en référence aux dessins annexés sur lesquels :
- la figure 1 représente une demi-vue schématique en coupe longitudinale, par un plan passant par l'axe de rotation, de la partie arrière d'un turboréacteur équipé d'un inverseur de poussée à obstacles aval de type connu.
- la figure 2 représente le mode de réalisation de type connu décrit suivant la figure 1 en mode jet inversé.
- la figure 3 représente dans une demi-vue analogue de la figure 1 un inverseur à obstacles aval en position jet direct selon un mode de réalisation de l'invention équipé d'un panneau interne mobile rentrant à pivot mobile.
- la figure 4 représente le mode de réalisation de l'invention décrit suivant la figure 3 en mode jet inversé.
- la figure 5 représente une demi-vue schématique en perspective de l'obstacle et du panneau mobile comme définis sur la figure 4 en mode jet inversé.
- la figure 6 représente dans une demi-vue analogue de la figure 1 un inverseur à obstacles aval en position jet direct selon un mode de réalisation de l'invention équipé d'un panneau interne mobile rentrant à pivot fixe.
- la figure 7 représente le mode de réalisation de l'invention décrit suivant la figure 6 en mode jet inversé.
- la figure 8 représente dans une demi-vue analogue de la figure 1 un inverseur à obstacles aval en position jet direct selon un mode de réalisation de l'invention équipé d'un panneau interne mobile sortant.
- la figure 9 représente le mode de réalisation de l'invention décrit suivant la figure 8 en mode jet inversé.

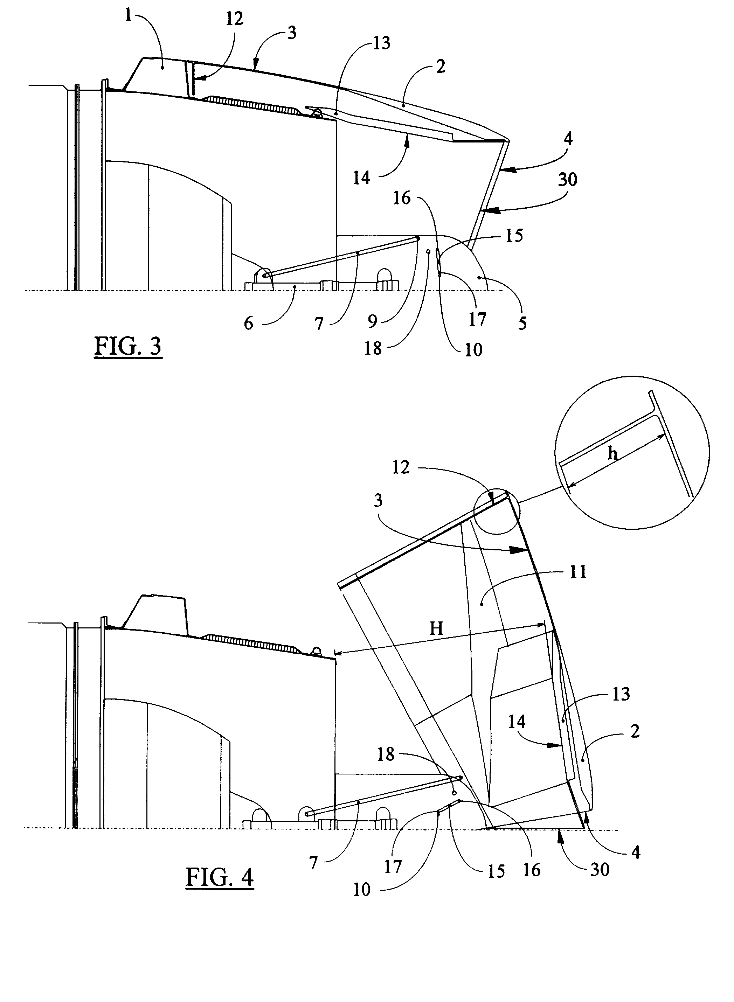

Selon un mode de réalisation de l'invention représenté sur les figures 3,4 et 5, un obstacle aval 2, articulé autour d'un point pivot 10 solidaire de la structure fixe, vient en recouvrement à l'amont avec la structure fixe 1 et à l'aval avec le panneau interne 13. Le panneau interne 13 est articulé autour d'un point pivot 18 solidaire de l'obstacle 2.

Le panneau interne 13 peut avoir une structure reliant la structure interne des poutres latérales 5 en position jet direct mais il peut aussi être limité en largeur, dans ce cas une cavité centrale ayant un fond 3 adapté et des flancs 11, est réalisée dans la structure de l'obstacle aval 2. Cette disposition de l'obstacle 2 permet de loger le panneau interne 13 en position jet inversé et garanti un meilleur guidage du flux d'éjection ; Il est à noter que les découpes latérales du panneau interne 13 peuvent être symétriques, décalées par rapport à l'axe central de l'obstacle 2 et plus ou moins étendues.

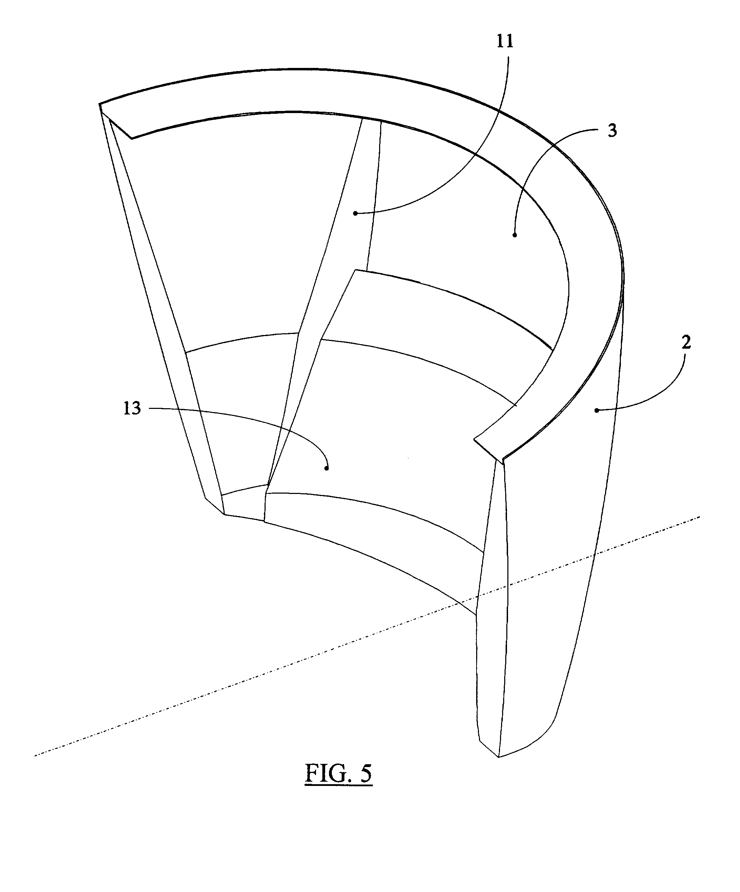

Le déploiement des obstacles en position jet inversé est réalisé par un vérin 6 généralement situé dans les poutres latérales 5 de la structure fixe 1, déplaçant une bielle 7 dont l'une des extrémités est reliée au point 9 solidaire de l'obstacle 2, entraînant ce dernier et son panneau mobile associé 13 en rotation autour du point pivot 10 solidaire de la structure fixe. Lors de ce mouvement, une bielle 15 dont l'une des extrémités est reliée à la poutre 5 au point pivot 17, l'autre extrémité étant reliée au panneau interne 13 au point pivot 16, entraîne ledit panneau interne en rotation autour du point pivot 18 avec un débattement angulaire plus grand que celui de l'obstacle 2. Le point pivot 18 se situe soit en bordure latéral de l'obstacle 2 soit contenu dans les flancs 11. On notera que le vérin 6 d'entraînement est monté fixe sur la structure fixe de l'inverseur et n'a pas de variation de sa position angulaire entre une position de jet direct et une position de jet inversé.
Afin d'augmenter la possibilité de déplacement du panneau interne 13 à l'intérieur de l'obstacle 2, l'extrémité amont-du panneau interne 13 est limitée de façon à se trouver le plus en aval du becquet 12 de l'obstacle 2, tout en assurant la continuité du profil de la tuyère d'éjection 14 et l'étanchéité avec la structure fixe en jet direct. Ceci permet également de bénéficier en position de jet inversé d'une plus grande longueur h du becquet 12.
Il est à noter également, que le fait de rentrer le profil interne 14 du panneau mobile 13 à l'intérieur de l'obstacle 2 augmente les possibilités de réglage de la distance H, paramètre géométrique remarquable? représentant la distance entre ledit profil interne 14 du panneau mobile 13 et l'extrémité aval de la structure fixe.
Comme le montre la figure 4, l'obturation de la sortie d'éjection au niveau de l'axe moteur est réalisée par l'extrémité aval 30 des panneaux mobiles 13, autorisant ainsi une possibilité de réglage supplémentaire sur la position déployée des obstacles 2 jusqu'à ce que leurs extrémités aval respectives 4 viennent également en contact, ces dernières pouvant être alignées ou en amont des extrémités aval 30 des panneaux mobiles. On peut selon le but recherché maintenir, ou non, en position jet inversé, une fuite entre les extrémités 30.

Pour le cas d'entraînement par vérin latéral, la butée de fin d'ouverture est faite soit entre les obstacles 2, soit entre les panneaux mobiles 13, soit par les vérins et bielles.

De plus, cela permet également en position jet direct de ramener lesdites extrémités aval 4 dans un plan le plus proche possible d'un plan perpendiculaire à l'axe moteur, réduisant ainsi les pertes aérodynamiques engendrées par le phénomène nommé par l'homme de métier "fish-mouth" ou "arête de poisson".

La structure du panneau interne 13 recouvrant celle de l'obstacle aval 2 en phase de jet inversé, peut permettre d'utiliser une structure allégée pour ledit obstacle aval, celui-ci n'étant pas au contact du flux primaire chaud de l'inverseur.

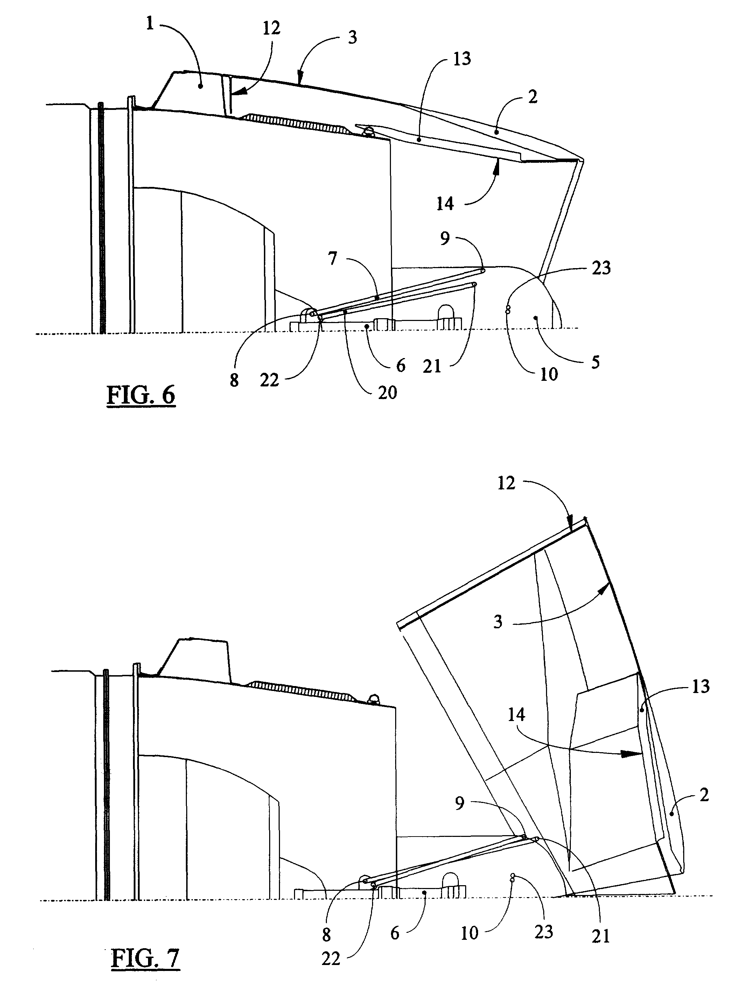

les figures 6 et 7 proposent, par rapport au mode de réalisation décrit précédemment une variante en ce qui concerne le mode d'entraînement du panneau interne mobile 13.

Dans ce mode de réalisation un vérin 6 commande simultanément deux bielles 7 et 20. La bielle 7 a son extrémité 8 reliée à la partie mobile du vérin, son autre extrémité étant reliée au point 9 solidaire de l'obstacle 2, dont le pivot 10 est solidaire de la poutre 5. La seconde bielle 20 a également une de ses extrémités reliée à la partie mobile du vérin au point 22, son autre extrémité étant reliée au point 21 solidaire du panneau mobile 13 dont le point pivot 23 est également solidaire de la poutre 5.

Les points 8 et 22 peuvent être confondus ou non, et positionnés sur le vérin de manière à obtenir la cinématique désirée. La position des points 9, 10, 21 et 22 dépend de la cinématique recherchée, les points pivot de l'obstacle 2 et du panneau 13 pouvant être concentriques.

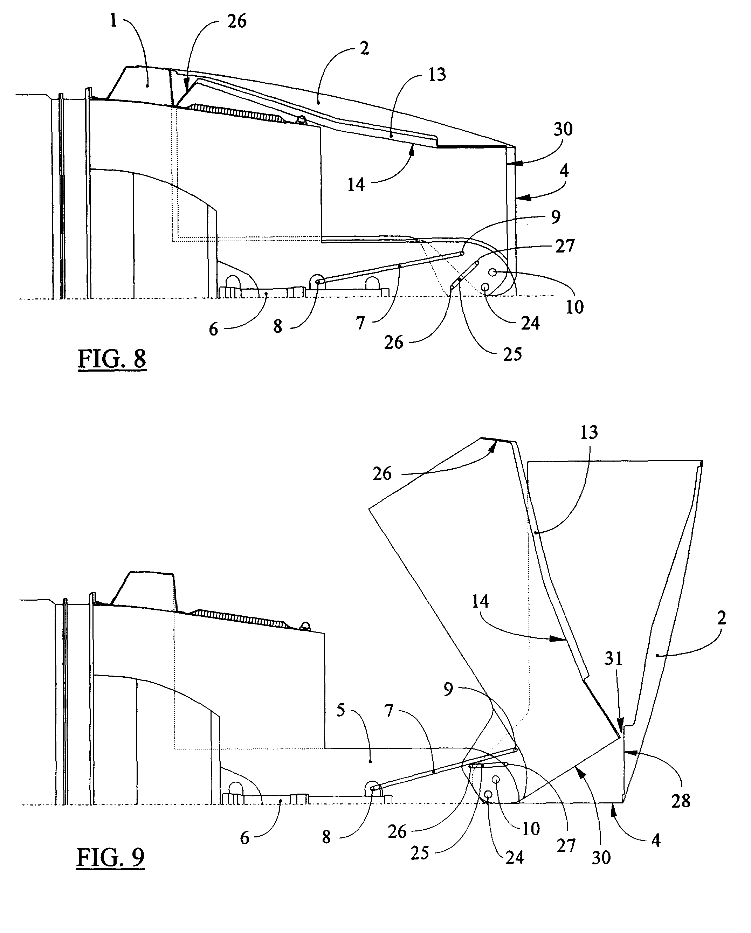

Les figures 8 et 9, montrent un autre mode de réalisation de l'invention selon laquelle l'obstacle 2 et son panneau interne associé 13 s'écartent l'un par rapport à l'autre lors du déploiement en position jet inversé, le panneau mobile 13 ayant un débattement angulaire inférieur à celui de l'obstacle 2.

Le déploiement du panneau interne 13 en position jet inversé est réalisé par un vérin 6 généralement situé dans les bras latéraux ou poutres 5 de la structure fixe 1, déplaçant une bielle 7 dont l'une des extrémités est reliée au point 9 solidaire dudit panneau, entraînant ce dernier en rotation autour du point pivot 24 solidaire de la structure fixe. Lors de ce mouvement, une bielle 25 dont l'une des extrémités est reliée au panneau interne 13 au point 26, l'autre extrémité étant reliée à l'obstacle 2 au point 27, entraîne ledit obstacle en rotation autour du point pivot 10 solidaire de la structure fixe.

En position jet inversé, le guidage du flux est assuré par la partie aval de la paroi interne 28 de l'obstacle 2 ainsi que par la totalité de la paroi interne 14 du panneau interne 13 et le becquet 26 situé à son extrémité amont, l'obturation de la sortie d'éjection au niveau de l'axe moteur étant assurée par l'extrémité aval 4 dudit obstacle 2 cette dernière étant située dans un plan perpendiculaire à l'axe moteur.
Le becquet 26 fait avec la paroi interne du panneau 13 un angle quelconque, optimisé selon l'effet recherché.

Il est à noter en position jet inversé l'existence d'une fuite 31, entre l'extrémité aval 30 du panneau interne 13 et la paroi interne 28 de l'obstacle 2, fuite dont on peut annuler ou contrôler la poussée résiduelle, voire transformer cette poussée résiduelle en contre poussée additionnelle. Cette dernière pouvant être, en fonction des performances aérodynamiques cherchées, augmentée ou diminuée.
L'entraînement des obstacles 2 et des panneaux internes 13 peut se faire par un vérin central qui peut être mécanique, électrique, pneumatique, simple ou télescopique, la butée de fin de course pouvant être faite par le vérin. Ledit vérin est monté fixe sur la structure amont fixe de l'inverseur et relié par des bielles d'entraînement aux obstacles 2 et panneaux internes 13.

Il est à noter que le principe d'entraînement par bielles défini sur les figures 6 et 7 peut être appliqué à ce concept, de même que le concept d'entraînement par pivot mobile associé à l'obstacle défini sur les figures 4 et 5.

Les dispositions de l'invention permettent d'obtenir dans tous les cas une optimisation de l'inversion de jet grâce à un positionnement angulaire différent entre le panneau interne 13 et l'obstacle 2 et également de réduire, voire annuler la découpe oblique de l'extrémité aval 4 des obstacles 2.
Les aménagements particuliers décrits ci-dessus permettent d'obtenir en outre en position de jet inversé un réglage des fuites et une réorientation optimisée de ces fuites.

## Revendications

1. Inverseur de poussée d'un turboréacteur à double flux comportant des éléments déplaçables ou obstacles aval (2) destinés, lors du fonctionnement du turboréacteur en poussée directe, à s'intégrer à la paroi extérieure du canal annulaire de flux secondaire en formant l'extrémité aval de la tuyère d'éjection de soufflante du turboréacteur, et, en position déployée, de constituer des obstacles de déviation du flux secondaire en procurant une inversion de poussée, lesdits obstacles (2) étant montés pivotants sur des pivots fixes (10) et associés à des moyens de déplacement (6, 7) caractérisé en ce que chaque obstacle aval (2) est équipé d'un panneau interne mobile (13), lesdits obstacles (2) et panneau interne (13) ayant des débattements angulaires différents lors du passage à la position correspondant au fonctionnement en inversion de poussée et le moyen de déplacement (6, 7) étant commun à l'obstacle aval (2) et au panneau interne (13) associé et étant monté fixe sur la structure fixe de l'inverseur.

2. Inverseur de poussée de turboréacteur à double flux selon la revendication 1 caractérisé en ce que le panneau interne (13) est articulé autour d'un pivot (23) solidaire de la structure fixe d'inverseur au niveau d'une poutre latérale (5) et le panneau interne mobile (13) présente un plus grand débattement angulaire par rapport à l'obstacle (2).

3. Inverseur de poussée de turboréacteur à double flux selon la revendication 1 caractérisé en ce que le panneau interne (13) est articulé autour d'un pivot (24) situé sur une poutre latérale (5) de la structure fixe d'inverseur et le panneau interne mobile (13) présente un plus faible débattement angulaire par rapport à l'obstacle (2).

4. Inverseur de poussée de turboréacteur à double flux selon la revendication 1 caractérisé en ce que le panneau interne (13) est articulé autour d'un pivot (18) solidaire de l'obstacle (2) et le panneau interne mobile (13) présente un plus grand débattement angulaire par rapport à l'obstacle (2).

5. Inverseur de poussée de turboréacteur à double flux selon la revendication 1 caractérisé en ce que le panneau interne mobile (13) présente un plus faible débattement angulaire par rapport à l'obstacle (2).

6. Inverseur de poussée de turboréacteur à double flux selon la revendication 4 caractérisé en ce que le panneau interne (13) est entraîné par une bielle (15) le reliant à une poutre latérale (5) de structure fixe, les moyens communs de déplacement de l'obstacle (2) et du panneau interne (13) comprenant un vérin (6) et une bielle de liaison (7), le vérin (6) étant monté fixe sur la structure fixe de l'inverseur.

7. Inverseur de poussée de turboréacteur à double flux selon l'une quelconque des revendications 1 à 6 caractérisé en ce que le panneau interne (13) est de largeur inférieure à l'obstacle (2) qui présente une cavité centrale limitée par un fond (3) et des flancs (11) et permettant de loger ledit panneau interne (13) en position de jet inversé en assurant le pilotage du flux d'éjection.

8. Inverseur de poussée de turboréacteur à double flux selon la revendication 2 caractérisé en ce que le panneau interne (13) est entraîné par une seconde bielle (20) le reliant (22) à la partie mobile d'un vérin (6) constituant le moyen commun de déplacement de l'obstacle (2) par l'intermédiaire d'une première bielle (7) et du panneau interne (13) par la seconde bielle (20), le vérin (6) étant monté fixe sur la structure fixe de l'inverseur.

9. Inverseur de poussée de turboréacteur à double flux selon la revendication 3 caractérisé en ce que les moyens communs de déplacement de l'obstacle (2) et du panneau interne (13) comprennent un vérin (6) et une bielle de liaison (7) entre le vérin (6) et le panneau interne (13) qui entraîne ledit obstacle (2) par l'intermédiaire d'une bielle (25), de manière à ménager une fuite (31), en position de jet inversé, entre l'extrémité aval (30) du panneau interne (13) et la paroi interne (28 de l'obstacle (2), le vérin (6) étant monté fixe sur la structure fixe de l'inverseur.
